(19) **Europäisches Patentamt**
**European Patent Office**
**Office européen des brevets**

(11) **EP 4 693 118 A1**

(12) **EUROPEAN PATENT APPLICATION**

(43) Date of publication:
**11.02.2026 Bulletin 2026/07**

(21) Application number: **25193498.0**

(22) Date of filing: **01.08.2025**

(51) International Patent Classification (IPC):
*G06N 10/60* (2022.01)    *G06N 3/0455* (2023.01)
*G06N 3/0464* (2023.01)    *G06N 3/084* (2023.01)
*G06N 3/09* (2023.01)    *G06N 10/20* (2022.01)
*G06N 10/40* (2022.01)

(52) Cooperative Patent Classification (CPC):
**G06N 3/0464; G06N 3/0455; G06N 3/084;**
**G06N 3/09; G06N 10/20; G06N 10/40; G06N 10/60**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **08.08.2024 IN 202421059910**

(71) Applicant: **Tata Consultancy Services Limited**
**Maharashtra (IN)**

(72) Inventors:
• **BANERJEE, Asmita**
**700160 Parganas, Kolkata (IN)**

• **PRAMANIK, Sayantan**
**560066 Bengaluru, Karnataka (IN)**
• **CHANDRA, Mariswamy Girish**
**560066 Bengaluru, Karnataka (IN)**
• **CHAKRABORTY, Rivu**
**700160 Parganas, Kolkata (IN)**
• **SRIDHAR, Chundi Venkata**
**500032 Rangareddi, Telangana (IN)**
• **MATHAIS, Godfrey Claudin Sylvester**
**400607 Thane, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR A FULLY QUANTUM U-NET FOR IMAGE SEGMENTATION**

(57)    This disclosure relates generally to method and system for a fully quantum U-Net for image segmentation. Currently in image segmentation methods using quantum classical deep learning hybrid models, quantum operations are either scarce or limited to quantum feature maps or parametrized circuits. The disclosed quantum U-Net contains quantum versions of operations required for segmentation task, namely convolution and concatenation. The quantum U-Net is able to reproduce the predicted output mask having nearly the same size as its input image. In the disclosed architecture, the quantum convolution takes the form of a series of parametrized unitary gates as convolution layers which act locally on the input image data embedded into a quantum circuit to learn its features. The disclosed method is used for medical image segmentation, in food industry and so on.

FIG. 7

**Description**

CROSS-REFERENCE TO RELATED APPLICATIONS AND PRIORITY

The present application claims priority to Indian application No. 202421059910, filed on August 8, 2024.

TECHNICAL FIELD

The disclosure herein generally relates to quantum machine learning, and, more particularly, to a method and system for a fully quantum U- Net for image segmentation.

BACKGROUND

Deep learning techniques like deep convolutional neural networks are powerful tools for image segmentation and image classification. These techniques achieve state-of-the-art performance on various benchmark datasets. However, currently the amount and complexity of visual data is growing and these deep learning techniques face significant computational challenges. On the other hand, quantum technologies can overcome this computational limitation with the power of quantum mechanics to perform computations in parallel. Quantum machine learning combines the principles of quantum mechanics and classical machine learning. Quantum machine learning leverages quantum mechanical properties to reduce the number of computational steps compared to its classical counterpart. In existing methods quantum machine learning exploits Hilbert space by using quantum kernels to encode classical data into it which is intractable and unsimulable by classical computers. Based on existing literatures it is found that among quantum plus classical deep learning hybrid models for segmentation, quantum operations are either scarce or limited to quantum feature maps or parametrized circuits.

In classical approach, U-Net is a pioneering architecture which is used for image segmentation, specially designed for segmenting medical images, however it has application in other fields as well. In a prior work, an enhanced U-Net is provided in which a quantum "parallel-path" is introduced in the bottleneck layer. To circumvent the expensive step of estimating quantum gradients, the quantum circuit comprised of a ZZ feature-map, and the model was designed such that backpropagation would stop along the quantum path, but continue unhindered along the classical one.

SUMMARY

Embodiments of the present disclosure present technological improvements as solutions to one or more of the above-mentioned technical problems recognized by the inventors in conventional systems. For example, in one embodiment, a method for a fully quantum U-Net for image segmentation is provided. The method includes receiving (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images. Further, the method includes, iteratively training the quantum U-Net for image segmentation by learning a set of parameters associated with a set of quantum convolution layers of the quantum U-Net, until a termination criteria is met, to obtain a trained quantum U-Net. The set of parameters are randomly initialized before a first iteration. The step of iteratively training includes, encoding each training image amongst the plurality of training images to a set of quantum states associated with a set of qubits of a quantum circuit component using an encoding technique. Further the iteratively training step includes, augmenting the quantum circuit component with a set of ancillary qubits, wherein number of the set of ancillary qubits is based on number of a set of quantum convolution layers of the quantum U-Net. Furthermore, the iteratively training step includes, creating a superposition of a set of distinct quantum states on the set of ancillary qubits utilizing a set of quantum gates. The number of the set of distinct quantum states is equal to number of the set of quantum convolution layers. Further, the iteratively training step includes, applying sequentially each quantum convolution layer amongst the set of quantum convolution layers on the set of qubits controlled by a corresponding distinct quantum state amongst the set of distinct quantum states created on the set of ancillary qubits to obtain an output at each quantum convolution layer. This step of applying causes superposition involving concatenation of the output of each quantum convolution layer with the output of a previous quantum convolution layer. Then, the iteratively training step includes, performing a measurement on the set of qubits to obtain a set of probability values corresponding to the set of quantum states and further computing a plurality of outputs from the set of probability values and calculating (i) a training loss based on the plurality of outputs and the plurality of first annotated masks, and (ii) a validation loss generated using the validation dataset. Finally, the set of parameters associated with the set of quantum convolution layers are learnt until the termination criteria is met. The termination criteria is one of (i) completion of a first predefined number of iterations, or (ii) a rate of change of the validation loss falls below an empirically determined threshold value a second predefined number of iterations.

In another aspect, a system for a fully quantum U-Net for image segmentation is provided. The system includes one or more hardware processors communicably coupled to a plurality of unentangled Quantum Processor Units (QPUs) via interfaces, wherein the one or more hardware processors comprises at least one memory storing programmed instructions; one or more Input/Output (I/O) interfaces; and one or more hardware processors operatively coupled to the at least one memory, wherein the one or more hardware processors and the plurality of unentangled QPUs are configured by the programmed instructions to receive by one or more hardware processors, (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images. Further, by the one or more hardware processors and the plurality of unentangled QPUs the quantum U-Net for image segmentation is iteratively trained by learning a set of parameters associated with a set of quantum convolution layers of the quantum U-Net, until a termination criteria is met, to obtain a trained quantum U-Net. The set of parameters are randomly initialized before a first iteration. The step of iteratively training includes, encoding each training image amongst the plurality of training images to a set of quantum states associated with a set of qubits of a quantum circuit component using an encoding technique. Further the iteratively training step includes, augmenting the quantum circuit component with a set of ancillary qubits, wherein number of the set of ancillary qubits is based on number of a set of quantum convolution layers of the quantum U-Net. Furthermore, the iteratively training step includes, creating a superposition of a set of distinct quantum states on the set of ancillary qubits utilizing a set of quantum gates. The number of the set of distinct quantum states is equal to number of the set of quantum convolution layers. Further, the iteratively training step includes, applying sequentially each quantum convolution layer amongst the set of quantum convolution layers on the set of qubits controlled by a corresponding distinct quantum state amongst the set of distinct quantum states created on the set of ancillary qubits to obtain an output at each quantum convolution layer. This step of applying causes superposition involving concatenation of the output of each quantum convolution layer with the output of a previous quantum convolution layer. Then, the iteratively training step includes, performing a measurement on the set of qubits to obtain a set of probability values corresponding to the set of quantum states and further computing a plurality of outputs from the set of probability values and calculating (i) a training loss based on the plurality of outputs and the plurality of first annotated masks, and (ii) a validation loss generated using the validation dataset. Finally, the set of parameters associated with the set of quantum convolution layers are learnt until the termination criteria is met. The termination criteria is one of (i) completion of a first predefined number of iterations, or (ii) a rate of change of the validation loss falls below an empirically determined threshold value for a second predefined number of iterations.

In yet another aspect, there are provided one or more non-transitory machine-readable information storage media comprising one or more instructions which when executed by one or more hardware processors cause for a fully quantum U-Net for image segmentation is provided. The instructions which when executed by the one or more hardware processors communicably coupled to a plurality of unentangled Quantum Processor Units (QPUs) via interfaces, causes to receive (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images. Further, the instructions which when executed by the one or more hardware processors and the plurality of unentangled QPUs cause the quantum U-Net for image segmentation iteratively trained by learning a set of parameters associated with a set of quantum convolution layers of the quantum U-Net, until a termination criteria is met, to obtain a trained quantum U-Net. The set of parameters are randomly initialized before a first iteration. The step of iteratively training includes, encoding each training image amongst the plurality of training images to a set of quantum states associated with a set of qubits of a quantum circuit component using an encoding technique. Further the training step includes, augmenting the quantum circuit component with a set of ancillary qubits, wherein number of the set of ancillary qubits is based on number of a set of quantum convolution layers of the quantum U-Net. Furthermore, the iteratively training step includes, creating a superposition of a set of distinct quantum states on the set of ancillary qubits utilizing a set of quantum gates. The number of the set of distinct quantum states is equal to number of the set of quantum convolution layers. Further, the iteratively training step includes, applying sequentially each quantum convolution layer amongst the set of quantum convolution layers on the set of qubits controlled by a corresponding distinct quantum state amongst the set of distinct quantum states created on the set of ancillary qubits to obtain an output at each quantum convolution layer. This step of applying causes superposition involving concatenation of the output of each quantum convolution layer with the output of a previous quantum convolution layer. Then, the iteratively training step includes, performing a measurement on the set of qubits to obtain a set of probability values corresponding to the set of quantum states and further computing a plurality of outputs from the set of probability values and calculating (i) a training loss based on the plurality of outputs and the plurality of first annotated masks, and (ii) a validation loss generated using the validation dataset. Finally, the set of parameters associated with the set of quantum convolution layers are learnt until the termination criteria is met. The termination criteria is one of (i) completion of a first predefined number of iterations, or (ii) a rate of change of the validation loss falls below an empirically determined threshold value for a second predefined number of iterations.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for image segmentation using a fully quantum U-Net according to some embodiments of the present disclosure.

FIGS. 2A, and 2B, collectively referred as FIG. 2 is an exemplary flow diagram illustrating a method for training the fully quantum U-Net for image segmentation by the system of FIG. 1 according to some embodiments of the present disclosure.

FIG. 3 illustrates an alternative representation of the flow diagram of FIG. 2, in accordance with some embodiments of the present disclosure.

FIG. 4 illustrates an example quantum U-Net for image segmentation in accordance with some embodiments of the present disclosure.

FIG. 5 illustrates a first quantum circuit example based on the example quantum neural architecture depicted in FIG. 4, according to some embodiments of the present disclosure.

FIG. 6 illustrates experimental results using the first quantum circuit example as depicted in FIG.5 in accordance with some embodiments of the present disclosure.

FIG. 7 illustrates a second quantum circuit example with three quantum convolution layers according to some embodiments of the present disclosure.

FIG. 8 illustrates experimental results using the second quantum circuit example as depicted in FIG.7 in accordance with some embodiments of the present disclosure.

FIG. 9A and FIG. 9B illustrate sample input images used for experimentation of the quantum U-Net in accordance with some embodiments of the present disclosure.

FIG. 10A and FIG. 10B illustrate annotated masks of the sample input images in FIG. 9A and 9B, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the current methodologies using quantum-classical deep learning hybrid models for image segmentation, quantum operations are either scarce or limited to quantum feature maps or parametrized circuits. In classical field, U-Net is a pioneering architecture designed for segmenting types of images, especially medical images. A related existing prior work introduced the concept of parallel classical and quantum paths, or subnetworks with unidirectional propagation (through the classical path) at the bottleneck layer of U-Net. The prior work also introduced the novelty of the design of the quantum feature map within a deep learning architecture which was suitable for object segmentation in images.

The disclosed method introduces a fully quantum (semantic segmentation) U-Net where backpropagation takes place along the quantum layers and no parallel classical convolution path is present. However, mapping the exact classical U-Net architecture (where the input image size reduces and blows back as predicted output of nearly its original input size through a serious of downsampling and then upsampling operations) completely into quantum domain is not possible. This is due to the unitary nature of quantum operations and the difficulty of a mid-quantum circuit measurement. In the disclosed method, a novel standalone quantum architecture for semantic segmentation of images is designed, inspired by U-Net and incorporating its flavor into quantum domain. However, the disclosed architecture can be inspired by any classical neural network architecture. The disclosed architecture contains quantum versions of operations required for segmentation task with U-Net, namely convolution and concatenation. It is able to reproduce the predicted output mask having nearly the same size as its input image. In the disclosed architecture, the quantum convolution takes the form of a series of parametrized unitary gates as convolution layers which act locally on the input image data embedded into a quantum circuit to learn its features. Each layer of quantum convolution or parametrized unitary gates is applied sequentially (like convolution layers in the U-Net architecture). To ensure this sequential application, each convolution layer is controlled by a distinct quantum state (in equal superposition with other distinct quantum states) prepared beforehand in the ancillary qubits of the quantum circuit. The quantum superposition, imposed by this action also helps superposition involving concatenation of the output of a current layer with the output of a previous layer, thus passing on the spatial information captured by the previous layer earlier. Further, the quantum circuit is measured without the ancillary qubits at the end to obtain the predicted mask, keeping its shape intact as the original image.

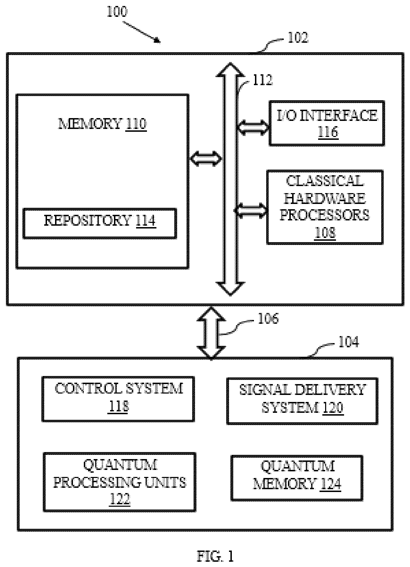

Referring now to the drawings, and more particularly to FIG. 1 through FIG.10B, where similar reference characters denote corresponding features consistently throughout the figures, there are shown preferred embodiments and these embodiments are described in the context of the following exemplary system and/or method.

FIG. 1 is a functional block diagram of a system 100 for image segmentation using a fully quantum U-Net according to some embodiments of the present disclosure. The system 100 includes a classical computing system 102, a quantum computing system 104 and a communication interface 106.

The classical computing system 102 comprises classical hardware processors 108, at least one memory such as a memory 110, an I/O interface 116. The classical hardware processors 108, the memory 110, and the Input /Output (I/O) interface 116 may be coupled by a system bus such as a system bus 112 or a similar mechanism. In an embodiment, the classical hardware processors 108 can be one or more hardware processors. The classical hardware processors and the hardware processors is interchangeably used throughout the document. Similarly, the classical computing system is a normal computing system.

The I/O interface 116 may include a variety of software and hardware interfaces, for example, a web interface, a graphical user interface, and the like., for example, interfaces for peripheral device(s), such as a keyboard, a mouse, an external memory, a printer and the like. Further, the I/O interface 116 may enable the system 100 to communicate with other devices, such as web servers, and external databases. The I/O interface 116 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 116 may include one or more ports for connecting several computing systems with one another or to another server computer.

The one or more hardware processors 108 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 108 is configured to fetch and execute computer-readable instructions stored in the memory 110.

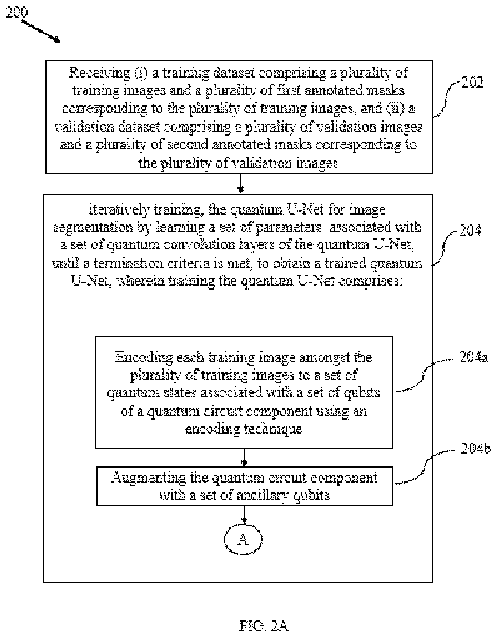

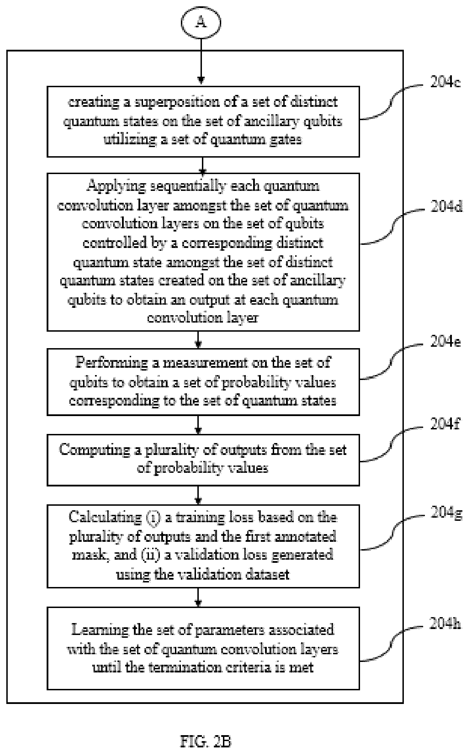

The memory 110 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 110 includes a data repository 114. The data repository (or repository) 114 may include a plurality of abstracted piece of code for refinement and data that is processed, received, or generated as a result of the execution of the method illustrated in FIG.2. Although the data repository 114 is shown internal to the system 100, it should be noted that, in alternate embodiments, the data repository 114 can also be implemented external to the system 100, where the data repository 114 may be stored within a database (repository 114) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

The example quantum computing system 104 shown in FIG. 1 includes a control system 118, a signal delivery system 120, a plurality of Quantum Processing Units (QPUs) 122 and a quantum memory 124. The plurality of QPUs 122 is unentangled and hence alternatively called the plurality of unentangled QPUs. The quantum computing system 104 may include additional or different features, and the components of the quantum computing system 104 may operate as described with respect to FIG. 1 or in another manner.

The example quantum computing system 104 shown in FIG. 1 can perform quantum computational tasks (such as, for example, quantum simulations or other quantum computational tasks) by executing quantum algorithms. In some implementations, the quantum computing system 104 can perform quantum computation by storing and manipulating information within individual quantum states of a composite quantum system. For example, Qubits (i.e., Quantum bits) can be stored in and represented by an effective two-level sub-manifold of a quantum coherent physical system in the plurality of QPUs 122. In an embodiment, the quantum computing system 104 can operate using gate-based models for quantum computing. For example, the Qubits can be initialized in an initial state, and a quantum logic circuit comprised of a series of quantum logic gates can be applied to transform the qubits and extract measurements representing the output of the quantum computation. The example QPUs 122 shown in FIG.1 may be implemented, for example, as a superconducting quantum integrated circuit that includes Qubit devices. The Qubit devices may be used to store and process quantum information, for example, by operating as ancilla Qubits, data Qubits or other types of Qubits in a quantum algorithm. Coupler devices in the superconducting quantum integrated circuit may be used to perform quantum logic operations on single qubits or conditional quantum logic operations on multiple qubits. In some instances, the conditional quantum logic can be performed in a manner that allows large-scale entanglement within the QPUs 122. Control signals may be delivered to the superconducting quantum integrated circuit, for example, to manipulate the quantum states of individual Qubits and the joint states of multiple Qubits. In some instances, information can be read from the superconducting quantum integrated circuit by measuring the quantum states of the qubit devices. The QPUs 122 may be implemented using another type of physical system.

The example QPUs 122, and in some cases all or part of the signal delivery system 120, can be maintained in a controlled cryogenic environment. The environment can be provided, for example, by shielding equipment, cryogenic equipment, and other types of environmental control systems. In some examples, the components in the QPUs 122 operate in a cryogenic temperature regime and are subject to very low electromagnetic and thermal noise. For example, magnetic shielding can be used to shield the system components from stray magnetic fields, optical shielding can be used to shield the system components from optical noise, thermal shielding and cryogenic equipment can be used to maintain the system components at controlled temperature, etc.

In the example shown in FIG. 1, the signal delivery system 120 provides communication between the control system 118 and the QPUs 122. For example, the signal delivery system 120 can receive control signals from the control system 118 and deliver the control signals to the QPUs 122. In some instances, the signal delivery system 120 performs preprocessing, signal conditioning, or other operations to the control signals before delivering them to the QPUs 122. In an embodiment, the signal delivery system 120 includes connectors or other hardware elements that transfer signals between the QPUs 122 and the control system 118. For example, the connection hardware can include signal lines, signal processing hardware, filters, feedthrough devices (e.g., light-tight feedthroughs, etc.), and other types of components. In some implementations, the connection hardware can span multiple different temperature and noise regimes. For example, the connection hardware can include a series of temperature stages that decrease between a higher temperature regime (e.g., at the control system 118) and a lower temperature regime (e.g., at the QPUs 122).

In the example quantum computer system 104 shown in FIG. 1, the control system 118 controls operation of the QPUs 122. The example control system 118 may include data processors, signal generators, interface components and other types of systems or subsystems. Components of the example control system 118 may operate in a room temperature regime, an intermediate temperature regime, or both. For example, the control system 118 can be configured to operate at much higher temperatures and be subject to much higher levels of noise than are present in the environment of the QPUs 122. In some embodiments, the control system 118 includes a classical computing system that executes software to compile instructions for the QPUs 122. For example, the control system 118 may decompose a quantum logic circuit or quantum computing program into discrete control operations or sets of control operations that can be executed by the hardware in the QPUs 122. In some examples, the control system 118 applies a quantum logic circuit by generating signals that cause the Qubit devices and other devices in the QPUs 122 to execute operations. For instance, the operations may correspond to single-Qubit gates, two-Qubit gates, Qubit measurements, etc. The control system 118 can generate control signals that are communicated to the QPUs 122 by the signal delivery system 120, and the devices in the QPUs 122 can execute the operations in response to the control signals.

In some other embodiments, the control system 118 includes one or more classical computers or classical computing components that produce a control sequence, for instance, based on a quantum computer program to be executed. For example, a classical processor may convert a quantum computer program to an instruction set for the native gate set or architecture of the QPUs 122. In some cases, the control system 118 includes a microwave signal source (e.g., an arbitrary waveform generator), a bias signal source (e.g., a direct current source) and other components that generate control signals to be delivered to the QPUs 122. The control signals may be generated based on a control sequence provided, for instance, by a classical processor in the control system 118. The example control system 118 may include conversion hardware that digitizes response signals received from the QPUs 122. The digitized response signals may be provided, for example, to a classical processor in the control system 118.

In some embodiments, the quantum computer system 104 includes multiple quantum information processors that operate as respective quantum processor units (QPU). In some cases, each QPU can operate independent of the others. For instance, the quantum computer system 104 may be configured to operate according to a distributed quantum computation model, or the quantum computer system 104 may utilize multiple QPUs in another manner. In some implementations, the quantum computer system 104 includes multiple control systems, and each QPU may be controlled by a dedicated control system. In some implementations, a single control system can control multiple QPUs; for instance, the control system 118 may include multiple domains that each control a respective QPU. In some instances, the quantum computing system 104 uses multiple QPUs to execute multiple unentangled quantum computations (e.g., multiple Variational Quantum Eigen solver (VQE)) that collectively simulate a single quantum mechanical system.

In an embodiment, the quantum memory 124 is a quantum-mechanical version of classical computer memory. The classical computer memory stores information such as binary states and the quantum memory 124 stores a quantum state for later retrieval. These states hold useful computational information known as Qubits. In an embodiment, the communication interface 106 which connects the classical computing system 102 and the quantum computing system 104 is a high speed digital interface.

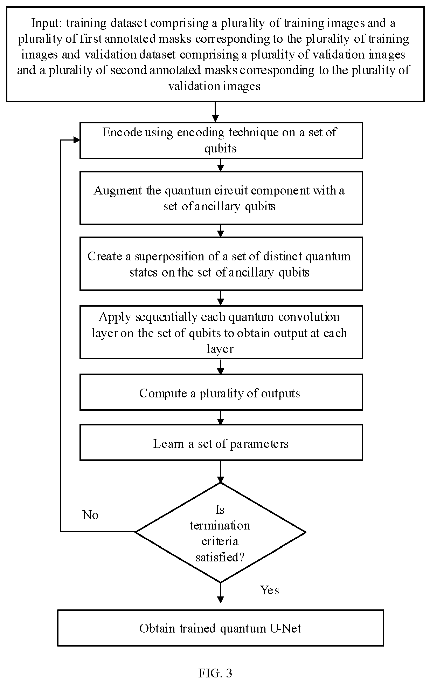

FIGS. 2A, and 2B, collectively referred as FIG. 2 is an exemplary flow diagram illustrating a method for training the fully quantum U-Net for image segmentation by the system 100 of FIG. 1 according to some embodiments of the present disclosure and FIG. 3 is an alternate representation of FIG. 2. In an embodiment, the system 100 includes one or more data storage devices or the memory 110 operatively coupled to the one or more hardware processor(s) 108 and is configured to store instructions for execution of steps of the method 200 by the one or more classical hardware processors 108. The steps of the method 200 of the present disclosure will now be explained with reference to the components or blocks of the system 100 as depicted in FIG. 1 and the steps of flow diagram as depicted in FIGS. 2 and 3. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of the method 200, one or more classical hardware processors are configured to receive a training dataset and a validation dataset. The training dataset includes a plurality of training images and a plurality of first annotated masks corresponding to the plurality of training images. The validation dataset includes a plurality of validation images and a plurality of second annotated masks corresponding to the plurality of validation images.

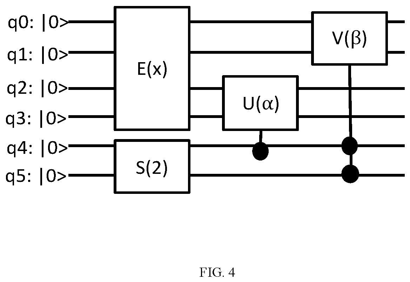

Further, at step 204 of the method 200, the one or more classical hardware processors and the plurality of unentangled QPUs are configured to iteratively train the quantum U-Net for image segmentation by learning a set of parameters associated with a set of quantum convolution layers of the quantum architecture, until a termination criteria is met. After iteratively training the quantum U-Net a trained quantum U-Net is obtained. The set of parameters are randomly initialized for a first iteration of training. For example, the set of parameters can be generated in python using built-in random module or other library's like Numpy's random module. Subject matter experts can also initialize the parameters based on their preferable distribution like uniform, normal etc. present in Numpy or Scipy modules depending on the need. The steps 204a through 204h are performed at each iteration to learn the set of parameters and further to obtain the trained quantum U-Net until the termination criteria is met. At step 204a, the plurality of unentangled QPUs are configured to encode each training image amongst the plurality of training images to a set of quantum states associated with a set of qubits of a quantum circuit component using an encoding technique. In this step an $M * N$ training image is first embedded into $n_q \geq ceil(log_2 M * N)$, (where $n_q$ is the number of qubits). The number of these qubits depends on the choice of embedding selected manually by a subject matter expert (SME) depending on the size and complexity of the training dataset, availability of quantum hardware or infrastructure resources for training. To elaborate, $ceil(log_2 M * N)$ qubits are required for amplitude encoding and $M * N$ qubits for angle encoding. In an embodiment, FIG. 4 depicts a generalized quantum circuit component of the quantum U-Net for image segmentation where the first 4 qubits are used for embedding. These 4 qubits can be used for datasets having $2 \times 2$ grayscale images, if angle embedding is used, or $4 \times 4$ grayscale images, if amplitude embedding is used. $E(x)$ denotes this embedding operation of the images to quantum circuit.

At step 204b, the plurality of unentangled QPUs are configured to augment the quantum circuit component with a set of ancillary qubits. The number of the set of ancillary qubits is based on number of a set of quantum convolution layers (L) of the quantum U-Net. The number of quantum convolution layers, L, for the image segmentation, is decided by the SME depending on the size and complexity of the training dataset and the computational power of available quantum hardware or infrastructure resources. For instance, the SME can configure the number of quantum convolution layers, L manually. Each quantum convolution layer is a parameterized unitary gate acting one after the other locally on the input-image embedded qubits, i.e., the set of qubits. The task of these quantum convolution layers, L is to learn the features of the training dataset. For instance, referring FIG. 4, U and V denote two layers of quantum convolution or parametrized unitary gates. The quantum circuit is then augmented with $n_a$ ancillary qubits, where $n_a \geq ceil(log_2 L)$,

At step 204c, the plurality of unentangled QPUs are configured to create a superposition of a set of distinct quantum states on the set of ancillary qubits utilizing a set of quantum gates. The number of the set of distinct quantum states is equal to number of the set of quantum convolution layers. The value of $n_a$ is chosen in sync with the value of L such that in the $n_a$ ancillary qubits, an equal superposition of L number of distinct quantum states can be formed. Thus, the value of $n_a$ is dependent on L and both chosen by the SME. For example, a general pattern can be established for the ancillary qubit state preparation for using L layers of quantum convolutions. In this general pattern, $n_a = L$ ancillary qubits are used (where $L >= 2$) and equal superposition of L (where $n_a = L$) distinct quantum states is created in $n_a$ qubits. To elaborate with example, referring to FIG. 4, S(2) denotes the ancillary qubit state preparation. As mentioned before, following this general pattern, here $n_a = L = 2$. The distinct $n_a = L = 2$ quantum states prepared in the ancillary qubits are in equal superposition: $(|10> + |11>)/sqrt(2)$. Generalizing for $S(n_a)$, $S(n_a)$ is initialized using equation 1 below,

$$S(n_a)|0\rangle^{\otimes n_a} = \frac{1}{\sqrt{n_a}}\sum_{i=1}^{n_a}|1\rangle^{\otimes i}|0\rangle^{\otimes(n_a-i)} \qquad (1)$$

To create $S(n_a)$ in $n_a$ ancillary qubits, 2 Ry gates and $n_a$ - 2 controlled Ry gates are used. Further, for angle values, of Ry and controlled Ry gates, a general formula is established as given in equation 2 below,

$$\theta_0 = \pi \ and \ \theta_i = 2cos^{-1}\left(\frac{1}{\sqrt{n_a+1-i}}\right), i \in \mathbb{Z}^+ | i < n_a \qquad (2)$$

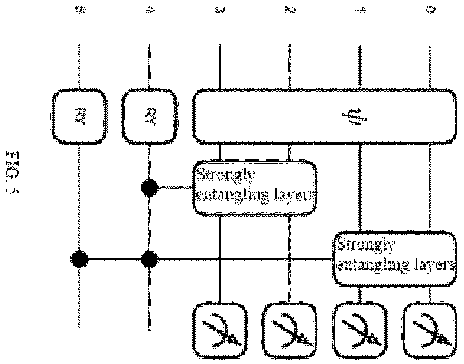

where $i$ = 1,2, ... $n_a$ - 1. So $S(2)$ of FIG. 4, should have one Ry gate used on each ancillary qubit as shown in FIG. 5, where $\theta_0$ = $\pi$ and

$$\theta_i = 2cos^{-1}\left(\frac{1}{\sqrt{n_a+1-i}}\right)$$

$$= 2cos^{-1}\left(\frac{1}{\sqrt{2}}\right), \text{ as } n_a = 2 \text{ and } i = 1.$$

And as $n_a$ = 2, $n_a$ - 2 = 0 controlled Ry gates are required, so no controlled Ry gates have been used.

At step 204d, the plurality of unentangled QPUs are configured to apply sequentially each quantum convolution layer amongst the set of quantum convolution layers on the set of qubits controlled by a corresponding distinct quantum state amongst the set of distinct quantum states to obtain an output at each quantum convolution layer. This step causes superposition involving concatenation of the output of each quantum convolution layer with the output of a previous quantum convolution layer. Each of these distinct quantum states is mapped as a control to its corresponding parameterized unitary gate or quantum convolution layer (henceforth, used interchangeably). This way, the order/sequence of the parameterized unitary gates in which they are placed (post the input-embedded qubits or the set of qubits) is always maintained, making them incommutable. This ensures the sequential application of quantum convolution layers like the U-Net architecture. The quantum superposition of the distinct quantum states prepared in the ancillary qubits simultaneously creates a superposition of the output of one quantum convolution layer with the output of a previous quantum convolution layer. This helps in concatenation of the output of the current layer with the output of a previous layer, thus passing on the spatial information captured by the previous layer earlier like the U-Net architecture.

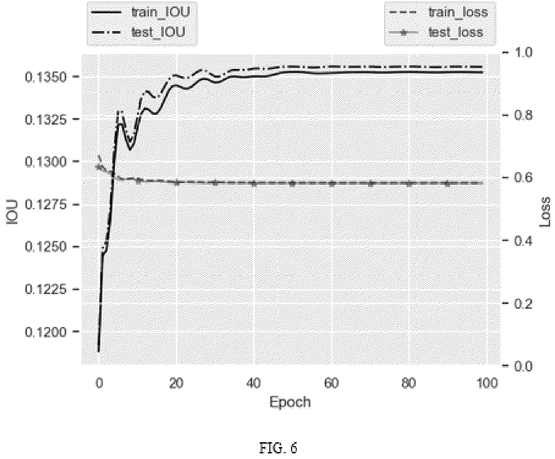

Further the above mentioned is explained using two examples, FIG. 5 denotes the first quantum circuit example (based on the general quantum circuit of FIG. 4) used for experimentation using Pennylane library. Here, $\Psi$ (psi) denotes amplitude embedding of the classical two-dimensional (2D) image data (of size 4×4) into quantum circuit using first four qubits. Two layers of quantum convolution were used, where each contains three strongly entangling layers. Referring to FIG. 5, the number of ancillary qubits used and their corresponding state preparation for controlling the sequential application of the two convolution layers follows the same explanation as in FIG. 4. FIG. 6 illustrates experimental results using the first quantum circuit example as depicted in FIG.5 in accordance with some embodiments of the present disclosure.

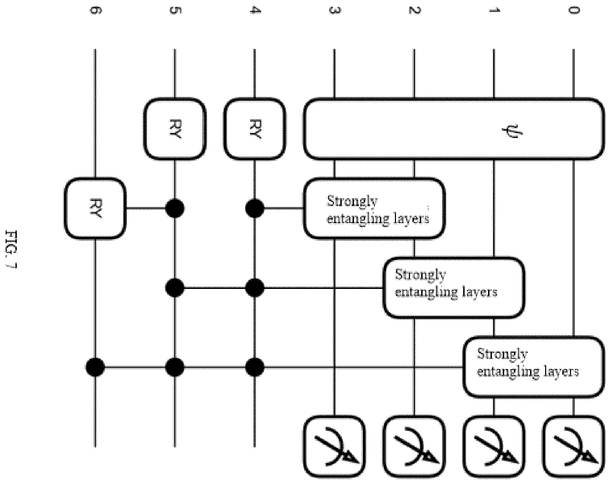

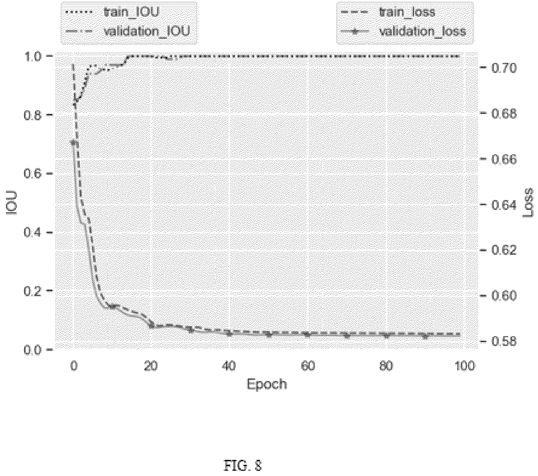

In another example, FIG. 7 denotes a second quantum circuit example using Pennylane library again. For executing the experimentation, the jax and optax libraries were also used along with pennylane library. For training the quantum circuits (created using pennylane library as mentioned earlier), the adam optimizer was used with learning rate determined by cosine_decay_schedule (0.1, decay_steps=100, alpha=0.95) from optax. Here, $\Psi$ (psi) denotes amplitude embedding of the classical 2D image data (of size 4×4) into quantum circuit using first four qubits as usual. But here, three layers of quantum convolution were used instead (where each contains three strongly entangling layers). Following the general pattern again, as $n_a$ = $L$ = 3, the last three qubits denote the ancillary qubit state preparation using 2 Ry gates and ($n_a$ - 2) = (3 - 2) = 1 controlled Ry gate. The angle values can be inferred based on previous descriptions for FIG. 4. FIG. 8 illustrates experimental results using the second quantum circuit example as depicted in FIG.7 in accordance with some embodiments of the present disclosure. For experimentation purpose to obtain experimental results are given in FIG. 6 and FIG. 8, the validation dataset and test dataset are taken as the same. 100 epochs were considered as the predefined number of iterations of the termination criteria. For both the plots in FIG. 6 and FIG. 8, the horizontal axis (or x-axis) represents the number of epochs. Two vertical axes are used, one to track the intersection over union (IOU) of the train and validation predicted segmented outputs and the other vertical axis is to track the train and validation loss as the number of epochs progress.

At step 204e, the one or more classical hardware processors and via the plurality of unentangled QPUs are configured to perform a measurement on the set of qubits to obtain a set of probability values corresponding to the set of quantum states.

At step 204f, the one or more classical hardware processors are configured to compute a plurality of outputs from the set of probability values. The quantum circuit component is measured at the end, leaving out the ancillary qubits and the plurality of outputs is obtained by computing the probability values of the quantum states, thus keeping its shape intact as original input training image.

At step 204g, the one or more classical hardware processors are configured to calculate a training loss based on the plurality of outputs and the plurality of first annotated masks, and a validation loss generated using the validation dataset. The training loss is calculated between the plurality of outputs and the plurality of first annotated masks corresponding to the plurality of training images. The validation outputs are obtained by providing the plurality of validation images to the quantum U-Net with the set of parameters learnt in a current iteration. The validation loss is calculated between the validation outputs and the second annotated masks. For each iteration the validation loss and the training loss is calculated.

At step 204h, the one or more classical hardware processors are configured to learn the set of parameters associated with the set of quantum convolution layers until the termination criteria are met. The termination criteria is one of completion of a first predefined number of iterations or a rate of change of the validation loss falls below an empirically determined threshold value for a second predefined number of iterations. When the termination criteria are met, by completing steps 204a to steps 204h through various iterations, the trained quantum U-Net is obtained with the set of parameters learnt for image segmentation.

The obtained trained quantum U-Net is further tested for an image. The image is provided to the trained quantum U-Net via the one or more classical hardware processors. Further, the image is encoded to a quantum circuit component using an encoding technique via the plurality of unentangled QPUs. Then, a predicted test output corresponding to the image is obtained by computing probability of each quantum state via measurement of the set of qubits. Finally, the predicted segmented output corresponding to the image is obtained from the predicted test output based on a threshold value.

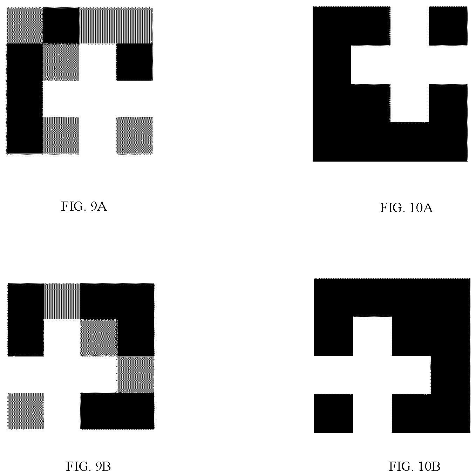

EXPERIMENTAL RESULTS: To test the performance of the disclosed quantum U-Net, a simple dataset of hundred $4 \times 4$ images was created, 80 of which were placed in the training set, and 20 in the validation set. Each image consists of an object - a monochromatic, white '+' sign spanning 3 pixels vertically and horizontally, with its center positioned randomly within the image; while the background comprised of black and gray pixels placed randomly. The architecture was used for two-class semantic segmentation involving the white '+' object and rest as background. The sample input images are shown as in FIG. 9A and FIG. 9B. The corresponding annotated masks of the input images in FIG. 9A and 9B is shown in FIG. 10A and FIG. 10B respectively. These sample input images are provided to FIG. 5 and FIG. 7 to obtain results as illustrated in FIG. 6 and FIG. 8 respectively.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure provide a method for image segmentation using the fully quantum U-Net which is trained as above. The disclosed quantum U-Net contains quantum versions of operations required for segmentation task, namely convolution and concatenation and is able to reproduce the predicted output mask having nearly the same size as its input image. The quantum convolution takes the form of a series of parametrized unitary gates as convolution layers and each layer of quantum convolution or parametrized unitary gates is applied sequentially. To ensure this sequential application, each convolution layer is controlled by a distinct quantum state (in equal superposition with other distinct quantum states) prepared beforehand in the ancillary qubits of the quantum circuit. The quantum superposition, imposed by this action also helps in concatenation of the output of a current layer with the output of a previous layer, thus passing on the spatial information captured by the previous layer earlier. Further, the quantum circuit measured without the ancillary qubits at the end to obtain the predicted mask, keeping its shape intact as the original image.

The disclosed method is applicable to use-cases related to semantic segmentation of images, which can be implemented in industrial applications in future when a better quantum infrastructure will be available. Such applications are as follows. This method can be utilized in medical image segmentation (e.g., blood vessel segmentation, lesion segmentation etc.). This method can help in expediting faster and cheaper diagnosis and early treatment of fatal diseases. This method can be applied to find out the area of various defects in multiple domains (civil, mechanical, etc.) and estimate for maintenance. This method can be extended into the food industry to check the quantity and distribution of ingredients.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method for training a quantum U-Net for image segmentation (200), performed by a system comprising one or more hardware processors and a plurality of unentangled Quantum Processor Units (QPUs), wherein the one or more hardware processors are communicably coupled to the plurality of unentangled QPUs by communication interfaces, wherein the method for training the quantum U-Net for image segmentation comprising:

   receiving (202), via the one or more hardware processors, (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images; and
   iteratively training (204), via the one or more hardware processors and via the plurality of unentangled QPUs, the quantum U-Net for image segmentation by learning a set of parameters associated with a set of quantum convolution layers of the quantum U-Net, until a termination criteria is met, to obtain a trained quantum U-Net, wherein the set of parameters are randomly initialized before a first iteration, and wherein quantum U-Net the step of iteratively training comprises:

      encoding (204a), via the plurality of unentangled QPUs, each training image amongst the plurality of training images to a set of quantum states associated with a set of qubits of a quantum circuit component using an encoding technique;
      augmenting (204b), via the plurality of unentangled QPUs, the quantum circuit component with a set of ancillary qubits, wherein number of the set of ancillary qubits is based on number of a set of quantum convolution layers of the quantum U-Net;
      creating (204c), via the plurality of unentangled QPUs, a superposition of a set of distinct quantum states on the set of ancillary qubits utilizing a set of quantum gates, wherein number of the set of distinct quantum states is equal to number of the set of quantum convolution layers;
      applying (204d), via the plurality of unentangled QPUs, sequentially each quantum convolution layer amongst the set of quantum convolution layers on the set of qubits controlled by a corresponding distinct quantum state amongst the set of distinct quantum states created on the set of ancillary qubits to obtain an output at each quantum convolution layer, wherein the step of applying causes superposition involving concatenation of the output of each quantum convolution layer with the output of a previous quantum convolution layer;

performing (204e), via the one or more hardware processors and via the plurality of unentangled QPUs, a measurement on the set of qubits to obtain a set of probability values corresponding to the set of quantum states;

computing (204f), via the one or more hardware processors, a plurality of outputs from the set of probability values;

calculating (204g), via the one or more hardware processors, (i) a training loss based on the plurality of outputs and the plurality of first annotated masks, and (ii) a validation loss generated using the validation dataset;

and

learning (204h), via the one or more hardware processors, the set of parameters associated with the set of quantum convolution layers until the termination criteria is met,

wherein the termination criteria is one of (i) completion of a first predefined number of iterations, or (ii) rate of change of the validation loss is below an empirically determined threshold value for a second predefined number of iterations.

2. The method as claimed in claim 1, wherein,

the set of qubits is determined based on (i) size and complexity of the training dataset, and (ii) quantum hardware resources for training, and

the set of quantum convolution layers is determined based on (i) size and complexity of the training dataset, and (ii) the quantum hardware resources for training.

3. The method as claimed in claim 1, wherein each quantum convolution layer amongst the set of quantum convolution layers is a parameterized unitary gate locally processed on the set of qubits.

4. The method as claimed in claim 1, wherein the validation loss is generated using the validation dataset and the set of parameters learnt in a current iteration.

5. The method as claimed in claim 1, comprising obtaining a predicted segment output from the trained quantum U-Net for an image, wherein obtaining the predicted segment output comprises,

providing, via the one or more hardware processors, the image to the trained quantum U-Net;

encoding, via the plurality of unentangled QPUs, the image to the quantum circuit using the encoding technique;

obtaining, via the one or more hardware processors and the plurality of unentangled QPUs, a predicted test output corresponding to the image by computing a probability of each quantum state via the measurement of the set of qubits; and

obtaining, via the one or more hardware processors, the predicted segmented output corresponding to the image from the predicted test output based on a threshold value.

6. A system (100) comprising:

one or more hardware processors (108) and a plurality of unentangled Quantum Processor Units (QPUs) (122), wherein the one or more classical hardware processors (108) are communicably coupled to the plurality of unentangled QPUs (122) by one or more communication interfaces (106), wherein the one or more classical hardware processors are operatively coupled to at least one memory (110) storing programmed instructions and one or more Input/Output (I/O) interfaces (116); and the plurality of unentangled quantum processors (122) are operatively coupled to the at least one quantum memory (124), wherein the one or more hardware processors (108) and the plurality of unentangled QPUs (122) are configured by the programmed instructions to:

receive (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images; and

iteratively train the quantum U-Net for image segmentation by learning a set of parameters associated with a set of quantum convolution layers of the quantum U-Net, until a termination criteria is met, to obtain a trained quantum U-Net, wherein the set of parameters are randomly initialized before a first iteration, and wherein the step of iteratively training the quantum U-Net comprises,

> encoding each training image amongst the plurality of training images to a set of quantum states associated with a set of qubits of a quantum circuit component using an encoding technique;
> augmenting the quantum circuit component with a set of ancillary qubits, wherein number of the set of ancillary qubits is based on number of a set of quantum convolution layers of the quantum U-Net;
> creating a superposition of a set of distinct quantum states on the set of ancillary qubits utilizing a set of quantum gates, wherein number of the set of distinct quantum states is equal to number of the set of quantum convolution layers;
> applying sequentially each quantum convolution layer amongst the set of quantum convolution layers on the set of qubits controlled by a corresponding distinct quantum state amongst the set of distinct quantum states created on the set of ancillary qubits to obtain an output at each quantum convolution layer, wherein the step of applying causes superposition involving concatenation of the output of each quantum convolution layer with the output of a previous quantum convolution layer;
> performing a measurement on the set of qubits to obtain a set of probability values corresponding to the set of quantum states;
> computing a plurality of outputs from the set of probability values;
> calculating (i) a training loss based on the plurality of outputs and the plurality of first annotated masks, and (ii) a validation loss generated using the validation dataset;
> and
> learning the set of parameters associated with the set of quantum convolution layers until the termination criteria is met,
> wherein the termination criteria is one of (i) completion of a predefined number of iterations, or (ii) rate of change of the validation loss is below an empirically determined threshold value for the predefined number of iterations.

7. The system as claimed in claim 6, wherein

> the set of qubits is determined based on (i) size and complexity of the training dataset, and (ii) quantum hardware resources for training, and
> the set of quantum convolution layers is determined based on (i) size and complexity of the training dataset, and (ii) the quantum hardware resources for training.

8. The system as claimed in claim 6, wherein each quantum convolution layer amongst the set of quantum convolution layers is a parameterized unitary gate locally processed on the set of qubits.

9. The system as claimed in claim 6, wherein the validation loss is generated using the validation dataset and the set of parameters learnt in a current iteration.

10. The system as claimed in claim 6, wherein the one or more hardware processors are configured to obtain a predicted segment output from the trained quantum U-Net for an image by,

> providing the image to the trained quantum U-Net;
> encoding the image to the quantum circuit using the encoding technique;
> obtaining a predicted test output corresponding to the image by computing a probability of each quantum state via the measurement of the set of qubits; and
> obtaining the predicted segmented output corresponding to the image from the predicted test output based on a threshold value.

11. One or more non-transitory machine-readable information storage mediums comprising one or more instructions which when executed by one or more hardware processors cause:

> receiving (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images; and
> iteratively training, via the plurality of unentangled QPUs, the quantum U-Net for image segmentation by learning a set of parameters associated with a set of quantum convolution layers of the quantum U-Net, until a termination criteria is met, to obtain a trained quantum U-Net, wherein the set of parameters are randomly initialized before a first iteration, and wherein quantum U-Net the step of iteratively training comprises:

encoding, via the plurality of unentangled QPUs, each training image amongst the plurality of training images to a set of quantum states associated with a set of qubits of a quantum circuit component using an encoding technique;

augmenting, via the plurality of unentangled QPUs, the quantum circuit component with a set of ancillary qubits, wherein number of the set of ancillary qubits is based on number of a set of quantum convolution layers of the quantum U-Net;

creating, via the plurality of unentangled QPUs, a superposition of a set of distinct quantum states on the set of ancillary qubits utilizing a set of quantum gates, wherein number of the set of distinct quantum states is equal to number of the set of quantum convolution layers;

applying, via the plurality of unentangled QPUs, sequentially each quantum convolution layer amongst the set of quantum convolution layers on the set of qubits controlled by a corresponding distinct quantum state amongst the set of distinct quantum states created on the set of ancillary qubits to obtain an output at each quantum convolution layer, wherein the step of applying causes superposition involving concatenation of the output of each quantum convolution layer with the output of a previous quantum convolution layer;

performing, via the plurality of unentangled QPUs, a measurement on the set of qubits to obtain a set of probability values corresponding to the set of quantum states;

computing, via the one or more hardware processors, a plurality of outputs from the set of probability values;

calculating, via the one or more hardware processors, (i) a training loss based on the plurality of outputs and the plurality of first annotated masks, and (ii) a validation loss generated using the validation dataset; and

learning, via the one or more hardware processors, the set of parameters associated with the set of quantum convolution layers until the termination criteria is met,

wherein the termination criteria is one of (i) completion of a first predefined number of iterations, or (ii) rate of change of the validation loss is below an empirically determined threshold value for a second predefined number of iterations.

12. The one or more non-transitory machine-readable information storage mediums as claimed in claim 11, wherein,

the set of qubits is determined based on (i) size and complexity of the training dataset, and (ii) quantum hardware resources for training, and

the set of quantum convolution layers is determined based on (i) size and complexity of the training dataset, and (ii) the quantum hardware resources for training.

13. The one or more non-transitory machine-readable information storage mediums as claimed in claim 11, wherein each quantum convolution layer amongst the set of quantum convolution layers is a parameterized unitary gate locally processed on the set of qubits.

14. The one or more non-transitory machine-readable information storage mediums as claimed in claim 11, wherein each quantum convolution layer amongst the set of quantum convolution layers is a parameterized unitary gate locally processed on the set of qubits.

15. The one or more non-transitory machine-readable information storage mediums as claimed in claim 11, comprising obtaining a predicted segment output from the trained quantum U-Net for an image, wherein obtaining the predicted segment output comprises,

providing the image to the trained quantum U-Net;

encoding, via the plurality of unentangled QPUs, the image to the quantum circuit using the encoding technique;

obtaining, via the plurality of unentangled QPUs, a predicted test output corresponding to the image by computing a probability of each quantum state via the measurement of the set of qubits; and

obtaining the predicted segmented output corresponding to the image from the predicted test output based on a threshold value.

100

102

112

MEMORY 110

REPOSITORY 114

I/O INTERFACE
116

CLASSICAL
HARDWARE
PROCESSORS
108

106

104

CONTROL SYSTEM
118

SIGNAL DELIVERY
SYSTEM 120

QUANTUM
PROCESSING UNITS
122

QUANTUM
MEMORY 124

FIG. 1

200

Receiving (i) a training dataset comprising a plurality of training images and a plurality of first annotated masks corresponding to the plurality of training images, and (ii) a validation dataset comprising a plurality of validation images and a plurality of second annotated masks corresponding to the plurality of validation images — 202

iteratively training, the quantum U-Net for image segmentation by learning a set of parameters associated with a set of quantum convolution layers of the quantum U-Net, until a termination criteria is met, to obtain a trained quantum U-Net, wherein training the quantum U-Net comprises: — 204

Encoding each training image amongst the plurality of training images to a set of quantum states associated with a set of qubits of a quantum circuit component using an encoding technique — 204a

Augmenting the quantum circuit component with a set of ancillary qubits — 204b

A

FIG. 2A

A

creating a superposition of a set of distinct
quantum states on the set of ancillary qubits
utilizing a set of quantum gates — 204c

Applying sequentially each quantum
convolution layer amongst the set of quantum
convolution layers on the set of qubits
controlled by a corresponding distinct
quantum state amongst the set of distinct
quantum states created on the set of ancillary
qubits to obtain an output at each quantum
convolution layer — 204d

Performing a measurement on the set of
qubits to obtain a set of probability values
corresponding to the set of quantum states — 204e

Computing a plurality of outputs from the set
of probability values — 204f

Calculating (i) a training loss based on the
plurality of outputs and the first annotated
mask, and (ii) a validation loss generated
using the validation dataset — 204g

Learning the set of parameters associated
with the set of quantum convolution layers
until the termination criteria is met — 204h

FIG. 2B

Input: training dataset comprising a plurality of training images and a plurality of first annotated masks corresponding to the plurality of training images and validation dataset comprising a plurality of validation images and a plurality of second annotated masks corresponding to the plurality of validation images

Encode using encoding technique on a set of qubits

Augment the quantum circuit component with a set of ancillary qubits

Create a superposition of a set of distinct quantum states on the set of ancillary qubits

Apply sequentially each quantum convolution layer on the set of qubits to obtain output at each layer

Compute a plurality of outputs

Learn a set of parameters

Is termination criteria satisfied?

No

Yes

Obtain trained quantum U-Net

FIG. 3

FIG. 4

FIG. 5

FIG. 6

FIG. 7

FIG. 8

FIG. 9A

FIG. 10A

FIG. 9B

FIG. 10B

Europäisches
Patentamt

European
Patent Office

Office européen
des brevets

# EUROPEAN SEARCH REPORT

**Application Number**

EP 25 19 3498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kölle Michael ET AL: "Quantum Denoising Diffusion Models", , 13 January 2024 (2024-01-13), pages 1-13, XP093338454, Retrieved from the Internet: URL:https://arxiv.org/pdf/2401.07049v1 [retrieved on 2025-11-20] * abstract * * page 1, left-hand column, line 1 - page 8, right-hand column, last line * * page 11, left-hand column, line 1 - page 13, last line * | 1-15 | INV. G06N10/60 G06N3/0455 G06N3/0464 G06N3/084 G06N3/09 G06N10/20 G06N10/40 |
| A | MINGRUI SHI ET AL: "Hybrid Quantum Neural Network Structures for Image Multi-classification", ARXIV.ORG, CORNELL UNIVERSITY LIBRARY, 201 OLIN LIBRARY CORNELL UNIVERSITY ITHACA, NY 14853, 30 August 2023 (2023-08-30), XP091601790, * abstract * * page 1, line 1 - page 16, last line * | 1-15 | |
| A | PRAMANIK SAYANTAN ET AL: "On a Possible Quantum Variational Autoencoder Circuit", 2021 INTERNATIONAL JOINT CONFERENCE ON NEURAL NETWORKS (IJCNN), IEEE, 18 July 2021 (2021-07-18), pages 1-6, XP033974482, DOI: 10.1109/IJCNN52387.2021.9533801 [retrieved on 2021-09-08] * abstract * * page 1, left-hand column, line 1 - page 5, right-hand column, last line * | 1-15 | TECHNICAL FIELDS SEARCHED (IPC) G06N |

The present search report has been drawn up for all claims

| Place of search | Date of completion of the search | Examiner |
|---|---|---|
| The Hague | 9 December 2025 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421059910